# EUROPEAN PATENT SPECIFICATION

(11) **EP 3 017 927 B1**
(45) Date of publication and mention of the grant of the patent: **13.09.2017**
(21) Application number: 15173101.5
(22) Date of filing: 22.06.2015
(51) Int. Cl.: B29B 17/02

(54) **MOBILE TIRE PROCESSING UNIT**
MOBILE REIFENVERARBEITUNGSEINHEIT
UNITÉ MOBILE DE TRAITEMENT DE PNEUS

(30) Priority: 04.11.2014 EP 14191775
(43) Date of publication of application: 11.05.2016
(73) Proprietor: Bura, Andrea, 4532 Nyirtura (HU); Erdei, Levente, 4532 Nyirtura (HU); Orosz, Jr., Laszlo, 4254 Nyiradony (HU); Lengyeine Farkas, Diana, 4400 Nyiregyhaza (HU)
(72) Inventor: Orosz Sen., László, 4254 Nyíradony (HU)
(74) Representative: Farago, Peter Andreas

(56) References cited:
- US-A- 4 240 587
- US-A- 6 045 070
- US-A1- 2009 057 449
- "RECYCLINGANLAGE FUER THERMOPLASTISCHE KUNSTSTOFFE", KUNSTSTOFFBERATER, 201975 1, vol. 37, no. 10, 1 October 1992 (1992-10-01), page 14, XP000324064, ISSN: 0172-6374

## Description

The present invention pertains to a mobile tire processing unit, in particular a mobile tire processing unit that is able to process full tires and to obtain substantially pure rubber from the processed full tires.

In the prior art tire processing units are known, such tire processing units being however cumbersome, occupying a surface of roughly 400 square meters. Therefore, the full tires processed by prior art units have to be transported over sometimes long distances with the unwanted side effects of environmental pollution, road congestion etc.

Furthermore, prior art tire processing units are inefficient and cause a substantial amount of noise in operation.
A tire processing unit according to the precharacterizing portion of claim 1 is known from US 6 045 070 A.
Therefore, the object of the present invention is to avoid the above drawbacks and to provide for an efficient and highly mobile tire processing unit.

A further object of the present invention is the provision of a mobile tire processing unit that works at low noise levels.

The foregoing objects and further objects that will become apparent hereinafter are solved by a mobile tire processing unit as defined in claim 1.

Further advantageous aspects of the present invention are set out in the dependent claims.

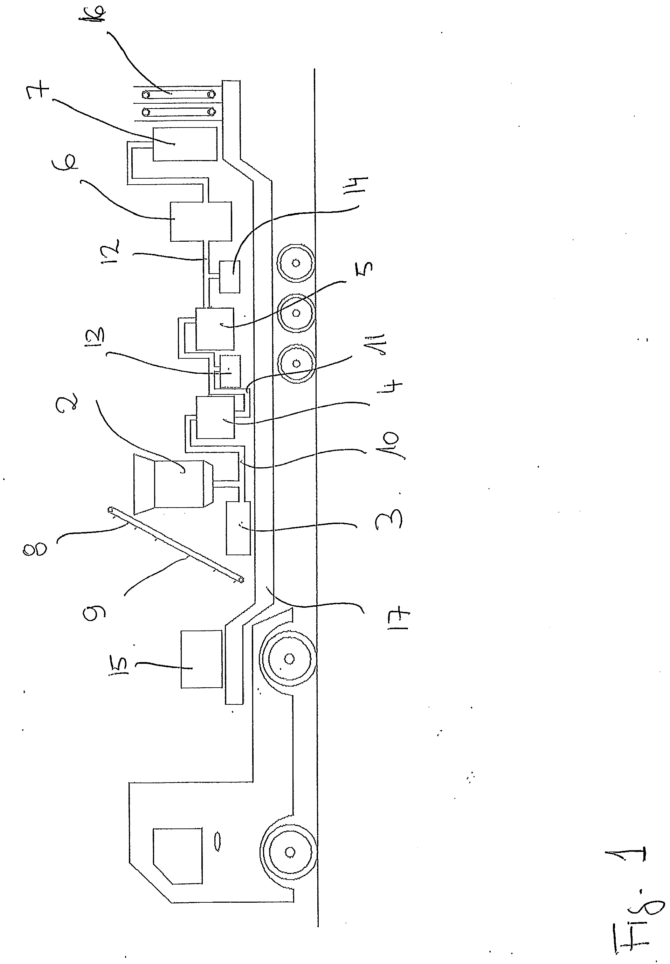

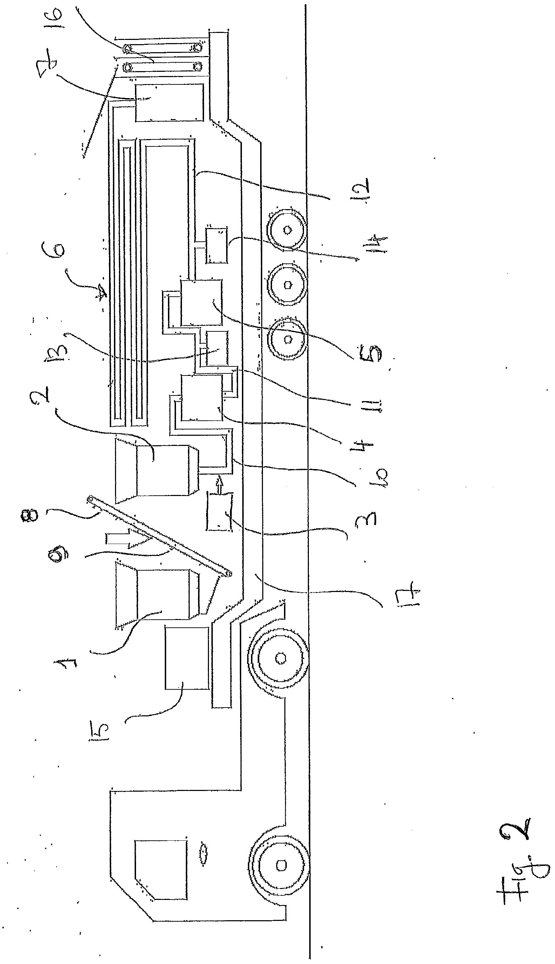

The foregoing and other objects, features, and advantages of the invention, as well as presently preferred embodiments thereof, will become more apparent from a reading of the following description, in connection with the accompanying drawings wherein
Fig. 1 shows an overall view of a first embodiment of the invention; and
Fig.2 shows an overall view of a second embodiment of the invention.
With reference to Fig. 1 a mobile tire processing unit according to a first embodiment of the invention is shown, the mobile tire processing unit comprising a grinder 2 which is adapted to receive shred tires or full tires. The shred tires can be received from an external shredder unit which is not shown in the embodiment of Fig. 1 and which is not part of the mobile tire processing unit or can be provided by a shredder which is part of the mobile tire processing unit as described in more detail with respect to the embodiment of Fig. 2. Nevertheless, it should be noted that according to the present invention the grinder 2 can also process full tires and that the external shredder unit or the shredder incorporated in the mobile tire processing unit are optional features.
Preferably the external unit shredder is adapted to receive full tires and to shred the full tires into first tire pieces of a first given size. Preferably the external shredder unit has a capacity of 2000 [kg/h]. The first tire pieces have preferably the first given size of about 5x5x2 [cm] per piece. The person skilled in the art will however appreciate that the first tire pieces have an amorphous shape and that the 5x5x3 cm size per piece is more a rough indicative of the extension of such pieces. The external shredder unit may be a conventional one with horizontally operating knives as known in the art.
As mentioned, the grinder 2 is adapted to receive the shred first tire pieces from the external shredder unit and to grind the first tire pieces into second tire pieces of a second given size that is smaller than the first given size, wherein the second given size is chosen such that the components making up the full tire are substantially disunited following the grinding. Such components are basically, as known in the art, rubber, steel and textiles. The grinder 2 has preferably a capacity of 2000 [hg/h], thus a capacity matching the capacity of the shredder 1. Preferably the second tire pieces have a roughly spherical shape with a diameter of 3 [mm]. The second tire piece size is chosen such that ground pieces can be separated into three raw material fractions (steel, textiles and rubber) and disunite as discussed above. Yet again, the person skilled in the art will appreciate that the second tire pieces have an amorphous shape and that the 3 [mm] diameter per piece is more a rough indicative of the dimension of such pieces. The grinder 2 may also receive full tires and in this case the grinder is adapted to grind the full tires into the second given size.
The mobile tire processing unit further comprises an air compressor 3 for providing pressurized air into the entire mobile tire processing unit at a position downstream of grinder 2. A first tubing 10 is connecting the downstream side of the grinder 2 with the upstream side of a first separator 4, the first tubing 10 further connecting at an intermediate section thereof to a compressor 3, such that the second tire pieces outputted from the grinder 2 are fed by means of the pressurized air from the compressor 3 into the first separator 4.

The compressor 3 provides the pressurized air into the first separator 4 that is positioned downstream of the grinder 2, the first separator 4 being adapted to receive the second tire pieces from the grinder 2 and to separate by means of gravity steel from the second tire pieces.

A second tubing 11 is connecting the downstream side of the first separator 4 with the upstream side of a second separator 5, such that the second tire pieces less the separated steel outputted from first separator 4 are fed by means of the pressurized air from the compressor 3 into the second separator 5.

The second separator 5 that positioned downstream of the first separator 4 is thus also receiving the pressurized air from the air compressor 3, the second separator 4 being adapted to receive the second tire pieces less the separated steel and to separate by means of gravity textiles from the second tire pieces.

A third tubing 12 is connecting the downstream side of the second separator 5 with the upstream side of a magnetic separator which is embodied as a magnetic drum 6, such that the second tire pieces less the separated steel and the separated textiles outputted from second separator 5 are fed by means of the pressurized air from the compressor 3 into the magnetic drum 6.

The magnetic drum 6 that is positioned downstream of the second separator 5 is thus also receiving pressurized air from the air compressor 3, the magnetic drum 6 being adapted to receive the second tire pieces less the separated steel and textiles and to retain further residual metallic impurities, such that substantially pure rubber is output from the magnetic drum 6.

At the output of the magnetic drum 6 substantially pure rubber (preferably in the shape of a granulate having a diameter of about 3 [mm]) can be obtained. The rubber will be recycled as product, the steel will be used in the iron industry, and the textiles can be sold as fuel.

A receiver container 7 is positioned downstream of the magnetic drum 6 and adapted to store the substantially pure rubber that is output from the magnetic drum 6.

The mobile tire processing unit further preferably comprises a first conveyor 8 positioned upstream the grinder 2 in order to convey the first tire pieces from the external shredder unit to the grinder 2, wherein the first conveyor 8 is arranged preferably at an angle of about 45° in respect to the ground on which the mobile tire processing unit is positioned and/or wherein the first conveyor 9 preferably is an endless conveyor belt including transversal retaining protrusions or steps 9, as compared to the conveying direction of the belt in order to facilitate the transportation of the first tire pieces.

The mobile tire processing unit further includes a first container 13 connected to receive the separated steel from the first separator 4, the first container 13 being preferably devised as briquetting station for compacting steel. The briquetting can occur by hydraulic actuation.

The mobile tire processing unit further includes a second container 14 connected to receive the separated textiles from the second separator 5, the second container 14 being preferably devised as briquetting station for compacting textiles. The briquetting can occur also in this case by hydraulic actuation.

Advantageously, the receiving container 7 is connected in a tight manner to the downstream side of magnetic drum 6, such that the pressurized air from the compressor 3 forces the substantially pure rubber that is output from the magnetic drum 6 into the receiving container 7 compacting the substantially pure rubber therein. The receiving container 7 is preferably embodied as a big-bag dispense tower. In alternative embodiments the receiving container 7 can be an open container without a tight connection to the magnetic drum. Nevertheless, according to the invention, the flow of pressurized air is continuous from the compressor 3 up to the output of the magnetic drum 6.

The mobile tire processing unit may further comprise a generator 15 which is adapted to power the mobile tire processing unit in an autonomous manner, the generator being preferably driven with diesel fuel.

The mobile tire processing unit may further comprise feed conveyor tapes 16 connectable to the shredder 1 in order to supply the full tires to the same from the ground level.

Advantageously the mobile tire processing unit further comprises a trailer 17 connectable to a truck for facilitating the transport of the mobile tire processing unit, wherein the trailer 17 is devised to support all or most of the components of the mobile tire processing unit.

The first separator 4 is devised to separate substances with a first specific gravity and the second separator 5 is devised to separate substances with a second specific gravity, wherein the first specific gravity is higher than the second specific gravity. Advantageously the first separator 4 or the second separator 5 are devised as an air table.

The above described mobile tire processing unit fully achieves the objects of the invention and provides for several advantages.

With reference to Fig. 2 a second embodiment of the mobile tire processing unit is shown comprising a shredder 1 which is adapted to receive full tires and to shred the full tires into first tire pieces of a first given size. The full tire is fed into the shredder 1 from the ground level. Preferably the shredder 1 has a capacity of 2000 [kg/h]. The first tire pieces have preferably the first given size of about 5x5x2 [cm] per piece. The person skilled in the art will however appreciate that the first tire pieces have an amorphous shape and that the 5x5x3 cm size per piece is more a rough indicative of the extension of such pieces. The shredder 1 may be a conventional one with horizontally operating knives as known in the art.
A grinder 2 positioned downstream of shredder 1 is adapted to receive the shred first tire pieces from the shredder 1 and to grind the first tire pieces into second tire pieces of a second given size that is smaller than the first given size, wherein the second given size is chosen such that the components making up the full tire are substantially disunited following the grinding. Such components are basically, as known in the art, rubber, steel and textiles. The grinder 2 has preferably a capacity of 2000 [kg/h], thus a capacity matching the capacity of the shredder 1. Preferably the second tire pieces have a roughly spherical shape with a diameter of 3 [mm]. The second tire piece size is chosen such that ground pieces can be separated into three raw material fractions (steel, textiles and rubber) and disunite as discussed above. Yet again, the person skilled in the art will appreciate that the second tire pieces have an amorphous shape and that the 3 [mm] diameter per piece is more a rough indicative of the dimension of such pieces.

The mobile tire processing unit of the second embodiment further comprises, as in the first embodiment, an air compressor 3 for providing pressurized air into the entire mobile tire processing unit at a position downstream of grinder 2. A first tubing 10 is connecting the downstream side of the grinder 2 with the upstream side of a first separator 4, the first tubing 10 further connecting at an intermediate section thereof to a compressor 3, such that the second tire pieces outputted from the grinder 2 are fed by means of the pressurized air from the compressor 3 into the first separator 4.

Likewise to the first embodiment, the compressor 3 in the second embodiment provides the pressurized air into the first separator 4 that is positioned downstream of the grinder 2, the first separator 4 being adapted to receive the second tire pieces from the grinder 2 and to separate by means of gravity steel from the second tire pieces.

Likewise to the first embodiment, a second tubing 11 is connecting in the second embodiment the downstream side of the first separator 4 with the upstream side of a second separator 5, such that the second tire pieces less the separated steel outputted from first separator 4 are fed by means of the pressurized air from the compressor 3 into the second separator 5.

Likewise to the first embodiment, the second separator 5 that positioned downstream of the first separator 4 is also receiving in the second embodiment the pressurized air from the air compressor 3, the second separator 4 being adapted to receive the second tire pieces less the separated steel and to separate by means of gravity textiles from the second tire pieces.

A third tubing 12 in the second embodiment is connecting the downstream side of the second separator 5 with the upstream side of a magnetic separator embodied in the second embodiment as a magnetic tubing 6', which replaces the magnetic drum 6 of the first embodiment, such that the second tire pieces less the separated steel and the separated textiles outputted from second separator 5 are fed by means of the pressurized air from the compressor 3 into the magnetic tubing 6'.

The magnetic tubing 6' of the second embodiment that is positioned downstream of the second separator 5 is thus also receiving pressurized air from the air compressor 3 (in a similar manner to the arrangement of the first embodiment), the magnetic tubing 6' being adapted to receive the second tire pieces less the separated steel and textiles and to retain along the tubing wall thereof further residual metallic impurities, such that substantially pure rubber is output from the magnetic tubing 6'.

In particular, residual metallic impurities present as micron size steel can appear in the rubber fraction. Accordingly, the magnetic tubing 6' can have a length of about 30-38 [m] to provide for a good removal of impurities from the rubber. The magnetic tubing 6' may be provided with at least one maintenance opening (not shown) to facilitate the cleaning thereof from the retained residual metallic impurities. This is particularly advantageous in the case of a magnetic tubing 6' having the foregoing length. Advantageously, the magnetic tubing 6' is provided at the inner side thereof with a permanent magnetic material.

At the output of the magnetic tubing 6' substantially pure rubber (preferably in the shape of a granulate having a diameter of about 3 [mm]) can be obtained. The rubber will be recycled as product, the steel will be used in the iron industry, and the textiles can be sold as fuel.

A receiver container 7 is positioned downstream of the magnetic tubing 6' and adapted to store the substantially pure rubber that is output from the magnetic tubing 6'.

The mobile tire processing unit of the second embodiment further preferably comprises a first conveyor 8 positioned downstream of the shredder 1 and upstream the grinder 2 in order to convey the first tire pieces from the shredder 1 to the grinder 2, wherein the first conveyor 8 is arranged preferably at an angle of about 45° in respect to the ground on which the mobile tire processing unit is positioned and/or wherein the first conveyor 9 preferably is an endless conveyor belt including transversal retaining protrusions or steps 9, as compared to the conveying direction of the belt in order to facilitate the transportation of the first tire pieces.

The mobile tire processing unit of the second embodiment further includes (in a similar manner to the first embodiment) a first container 13 connected to receive the separated steel from the first separator 4, the first container 13 being preferably devised as briquetting station for compacting steel. The briquetting can occur by hydraulic actuation.

The mobile tire processing unit of the second embodiment further includes a second container 14 connected to receive the separated textiles from the second separator 5, the second container 14 being preferably devised as briquetting station for compacting textiles. The briquetting can occur also in this case by hydraulic actuation.

Advantageously, the receiving container 7 of the second embodiment is connected in a tight manner to the downstream side of the magnetic tubing 6', such that the pressurized air from the compressor 3 forces the substantially pure rubber that is output from the magnetic tubing 6' into the receiving container 6 compacting the substantially pure rubber therein. The receiving container 7 is preferably embodied as a big-bag dispense tower. In alternative embodiments the receiving container 7 can be an open container without a tight connection to the magnetic tubing. Nevertheless, according to the invention, the flow of pressurized air is continuous from the compressor 3 up to the output of the magnetic tubing 6'.

The mobile tire processing unit of the second embodiment) may further comprise a generator 15 which is adapted to power the mobile tire processing unit in an autonomous manner, the generator being preferably driven with diesel fuel.

The mobile tire processing unit of the second embodiment may further comprise feed conveyor tapes 16 connectable to the shredder 1 in order to supply the full tires to the same from the ground level.

Advantageously the mobile tire processing unit further comprises a trailer 17 connectable to a truck for facilitating the transport of the mobile tire processing unit, wherein the trailer 17 is devised to support all or most of the components of the mobile tire processing unit.

The first separator 4 in the second embodiment (in a similar manner to the first embodiment)) is devised to separate substances with a first specific gravity and the second separator 5 is devised to separate substances with a second specific gravity, wherein the first specific gravity is higher than the second specific gravity. Advantageously the first separator 4 or the second separator 5 are devised as an air table.

The above described mobile tire processing unit according to the first or second embodiments fully achieves the objects of the invention and provides for several advantages.

In particular, the overall transportation price of the recycled rubber is reduced by 2/3 as compared to the conventional tire recycling units. The pollution during shipping is starkly reduced. Furthermore, in contrast to the conventional waste management, the size of the technology, infrastructure and human resource management can be reduced. In addition, the present mobile unit differs from the other existing tire processing plants by its compactness. The number and the length of the conveyor belts reduce substantially the consumption of energy and in fact the overall energy consumption of the mobile unit of the present invention is 1/6 of that of a conventional unit. The present magnetic tubing which is fixed causes a substantial noise reduction as compared to conventional the vibration tables. Also wear of the parts is reduced. With the unit of the present invention all the "historical stock rubber" can be modified from waste to raw material at the place of production without shipping cost.

In addition above described mobile tire processing unit according to the first or second embodiments avoids environmental damage and stress, in that it does not require a dedicated building to function and can be moved from location to location as need be.

Moreover, the above described mobile tire processing unit according to the first or second embodiments can be used to separate other materials than rubber which includes three fractions, like for instance vehicle filters.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. A mobile tire processing unit comprising:
a grinder (2) which is adapted grind first tire pieces or full tires into second tire pieces of a second given size, wherein the second given size is chosen such that the components making up the full tire are substantially disunited following the grinding;
a first separator (4) positioned downstream of the grinder (2), the first separator (4) being adapted to receive the second tire pieces from the grinder (2) and to separate by means of gravity steel from the second tire pieces;
a second separator (5) positioned downstream of the first separator (4), the second separator (4) being adapted to receive the second tire pieces less the separated steel and to separate by means of gravity textiles from the second tire pieces; and
a receiver container (7),
**characterized in that** the mobile tire processing unit further comprises:
an air compressor (3) for providing pressurized air to the mobile tire processing unit at a position downstream of grinder (2), the first separator (4) receiving the pressurized air from the air compressor (3), the second separator (5) also receiving the pressurized air from the air compressor (3); and
a magnetic separator (6, 6') positioned downstream of the second separator (5) and also receiving pressurized air from the air compressor (3), the magnetic separator (6. 6') being adapted to receive the second tire pieces less the separated steel and textiles and to retain along the tubing wall thereof further residual metallic impurities, such that substantially pure rubber is output from the magnetic separator (6. 6'), wherein the receiver container (7) is positioned downstream of the magnetic separator (6, 6') and adapted to store the substantially pure rubber that is output from the magnetic separator (6, 6').

2. The mobile tire processing unit according to claim 1, further comprising a first conveyor (8) positioned upstream of the grinder (2) in order to convey the first tire pieces or full tires to the grinder (2), wherein the first conveyor (8) is arranged preferably at an angle of about 45° with respect to the ground on which the mobile tire processing unit is positioned and/or wherein the first conveyor (9) preferably is an endless conveyor belt including transversal retaining protrusions or steps (9) with respect to the conveying direction of the belt to facilitate the transportation of the first tire pieces.

3. The mobile tire processing unit according to claim 1 or 2, further comprising a first tubing (10) connecting the downstream side of the grinder (2) with the upstream side of the first separator (4), the first tubing (10) further being connected, at an intermediate section thereof, to the compressor (3), such that the second tire pieces which are output from the grinder (2) are fed by means of the pressurized air from the compressor (3) into the first separator (4).

4. The mobile tire processing unit according to any of the preceding claims, further comprising a second tubing (11) connecting the downstream side of the first separator (4) with the upstream side of the second separator (5), such that the second tire pieces less the separated steel which is output from the first separator (4) are fed by means of the pressurized air from the compressor (3) into the second separator (5).

5. The mobile tire processing unit according to any of the preceding claims, further comprising a third tubing (12) connecting the downstream side of the second separator (5) with the upstream side of the magnetic separator (6, 6'), such that the second tire pieces less the separated steel and the separated textiles output from the second separator (5) are fed by means of the pressurized air from the compressor (3) into the magnetic tubing (6).

6. The mobile tire processing unit according to any of the preceding claims, further comprising a first container (13) connected to receive the separated steel from the first separator (4), wherein the first container (13) is preferably devised as a briquetting station for compacting steel.

7. The mobile tire processing unit according to any of the preceding claims, further comprising a second container (14) connected to receive the separated textiles from the second separator (5), wherein the second container (14) is preferably devised as a briquetting station for compacting textiles.

8. The mobile tire processing unit according to any of the preceding claims, wherein the receiving container (7) is connected in a tight manner to the downstream side of the magnetic separator (6, 6'), such that the pressurized air from the compressor (3) forces the substantially pure rubber that is output from the magnetic separator (6, 6') into the receiving container (7) compacting the substantially pure rubber therein, and wherein the receiving container (7) is preferably embodied as a big-bag dispense tower.

9. The mobile tire processing unit according to any of the preceding claims, further comprising a generator (15) which is adapted to power the mobile tire processing unit in an autonomous manner, wherein the generator is preferably driven by diesel fuel.

10. The mobile tire processing unit according to any of the preceding claims, further comprising a trailer (17) connectable to a truck for facilitating the transport of the mobile tire processing unit, wherein the trailer (17) is devised to support the components of the mobile tire processing unit.

11. The mobile tire processing unit according to any of the preceding claims, wherein the first separator (4) is devised to separate substances with a first specific gravity and the second separator (5) is devised to separate substances with a second specific gravity, wherein the first specific gravity is higher than the second specific gravity.

12. The mobile tire processing unit according to any of the preceding claims, wherein the first separator (4) or the second separator (5) are devised as an air table.

13. The mobile tire processing unit according to any of the preceding claims, wherein the magnetic separator (6, 6') is a magnetic drum (6) or a magnetic tubing (6'), wherein preferably the magnetic tubing (6') is provided with at least one maintenance opening to facilitate the cleaning thereof from the retained residual metallic impurities and/or wherein the magnetic tubing (6') is provided at the inner side thereof with a permanent magnetic material

14. The mobile tire processing unit according to any of the preceding claims, further comprising a shredder (1) which is adapted to receive full tires and to shred the full tires into first tire pieces of the first given size, and wherein
the grinder (2) is positioned downstream of shredder (1) and is adapted to receive the shred first tire pieces from the shredder (1).

15. The mobile tire processing unit according to claim 14, further comprising feed conveyor tapes (16) connectable to the shredder (1) in order to supply the full tires to the same.

## Patentansprüche

1. Eine mobile Reifenverarbeitungseinheit, die Folgendes umfasst:
eine Mühle (2), die ausgebildet ist, um erste Reifenstücke oder ganze Reifen zu zweiten Reifenstücken mit einer zweiten bestimmten Größe zu mahlen, wobei die zweite bestimmte Größe so gewählt ist, dass die Komponenten, die den ganzen Reifen bilden, nach dem Mahlen im Wesentlichen getrennt sind;
einen ersten Separator (4), stromabwärts von der Mühle (2) positioniert, wobei der erste Separator (4) ausgebildet ist, um die zweiten Reifenstücke von der Mühle (2) zu empfangen und mit Hilfe der Schwerkraft Stahl von den zweiten Reifenstücken zu trennen;
einen zweiten Separator (5), stromabwärts vom ersten Separator (4) positioniert, wobei der zweite Separator (4) ausgebildet ist, um die zweiten Reifenstücke ohne den abgetrennten Stahl zu empfangen und um mit Hilfe der Schwerkraft. Textilien von den zweiten Reifenstücken zu trennen; und
einen Empfangsbehälter (7),
**dadurch gekennzeichnet, dass** die mobile Reifenverarbeitungseinheit weiter Folgendes umfasst:
einen Luftkompressor (3) zur Versorgung der mobilen Reifenverarbeitungseinheit mit Druckluft in einer Position stromabwärts von der Mühle (2), wobei der erste Separator (4) die Druckluft vom Luftkompressor (3) empfängt und der zweite Separator die Druckluft ebenfalls vom Druckkompressor (3) empfängt; und
einen Magnetabscheider (6, 6'), stromabwärts vom zweiten Separator (5) positioniert und ebenfalls Druckluft vom Luftkompressor (3) empfangend, wobei der Magnetabscheider (6, 6') ausgebildet ist, um die zweiten Reifenstücke ohne den abgetrennten Stahl und die Textilien zu erhalten und um entlang der Rohrwand desselben weitere restliche metallische Verunreinigungen zurückzuhalten, so dass im Wesentlichen reines Gummi vom Magnetabscheider (6, 6') ausgegeben wird, wobei der Empfangsbehälter (7) stromabwärts vom Magnetabscheider (6, 6') positioniert und ausgebildet ist, um das im Wesentlichen reine Gummi zu lagern, das vom Magnetabscheider (6, 6') ausgegeben wird.

2. Die mobile Reifenverarbeitungseinheit gemäß Anspruch 1, die weiter einen ersten Förderer (8) umfasst, stromaufwärts von der Mühle (2) positioniert, um die ersten Reifenstücke oder vollständigen Reifen zu der Mühle (2) zu befördern, wobei der erste Förderer (8) vorzugsweise in einem Winkel von ungefähr 45° zum Boden angeordnet ist, auf dem die mobile Reifenverarbeitungseinheit positioniert ist, und/oder wobei der erste Förderer (9) vorzugsweise ein Endlosförderband ist, das transversale Zurückhalte-Vorsprünge oder Stufen (9) mit Bezug auf die Förderrichtung des Bandes einschließt, um den Transport der ersten Reifenstücke zu erleichtern.

3. Die mobile Reifenverarbeitungseinheit gemäß Anspruch 1 oder 2, die weiter eine erste Rohrleitung (10) umfasst, welche die stromabwärts gelegene Seite der Mühle (2) mit der stromaufwärts gelegenen Seite des ersten Separators (4) verbindet, wobei die erste Rohrleitung (10) weiter, an einem intermediären Abschnitt derselben, mit dem Kompressor (3) verbunden ist, so dass die zweiten Reifenstücke, die von der Mühle (2) ausgegeben werden, mit Hilfe der Druckluft vom Kompressor (3) in den ersten Separator (4) gefördert werden.

4. Die mobile Reifenverarbeitungseinheit gemäß einem beliebigen der obigen Ansprüche, die weiter eine zweite Rohrleitung (11) umfasst, die die stromabwärts gelegene Seite des ersten Separators (4) mit der stromaufwärts gelegenen Seite des zweiten Separators (5) verbindet, so dass die zweiten Reifenstücke, ohne den abgetrennten Stahl, der vom ersten Separator (4) ausgegeben wird, mit Hilfe der Druckluft vom Kompressor (3) in den zweiten Separator (5) gefördert werden.

5. Die mobile Reifenverarbeitungseinheit gemäß einem beliebigen der obigen Ansprüche, die weiter eine dritte Rohrleitung (12) umfasst, die die stromabwärts gelegene Seite des zweiten Separators (5) mit der stromaufwärts gelegenen Seite des Magnetabscheiders (6, 6') verbindet, so dass die zweiten Reifenstücke, ohne den abgetrennten Stahl und die abgetrennten Textilien, die vom zweiten Separator (5) ausgegeben werden, mit Hilfe der Druckluft vom Kompressor (3) in die magnetische Rohrleitung (6) gefördert werden.

6. Die mobile Reifenverarbeitungseinheit gemäß einem beliebigen der obigen Ansprüche, die weiter einen ersten Behälter (13) umfasst, angeschlossen, um den abgetrennten Stahl vom ersten Separator (4) zu empfangen, wobei der erste Behälter (13) vorzugsweise als Paketierstation zum Pressen von Stahl ausgebildet ist.

7. Die mobile Reifenverarbeitungseinheit gemäß einem beliebigen der obigen Ansprüche, die weiter einen zweiten Behälter (14) umfasst, angeschlossen, um die abgetrennten Textilien vom zweiten Separator (5) zu empfangen, wobei der zweite Behälter (14) vorzugsweise als Paketierstation zum Pressen von Textilien ausgebildet ist.

8. Die mobile Reifenverarbeitungseinheit gemäß einem beliebigen der obigen Ansprüche, wobei der Empfangsbehälter (7) dicht mit der stromabwärts gelegenen Seite des Magnetabscheiders (6, 6') verbunden ist, so dass die Druckluft vom Kompressor (3) das im Wesentlichen reine Gummi, das vom Magnetabscheider (6, 6') ausgegeben wird, in den Empfangsbehälter (7) drückt und das im Wesentlichen reine Gummi darin zusammendrückt, und wobei der Empfangsbehälter (7) vorzugsweise als Großtüten-Spenderturm ausgeführt ist.

9. Die mobile Reifenverarbeitungseinheit gemäß einem beliebigen der obigen Ansprüche, die weiter einen Generator (15) umfasst, welcher ausgebildet ist, um die mobile Reifenverarbeitungseinheit autonom mit Strom zu versorgen, wobei der Generator vorzugsweise mit Dieseltreibstoff angetrieben wird.

10. Die mobile Reifenverarbeitungseinheit gemäß einem beliebigen der obigen Ansprüche, die weiter einen Anhänger (17) umfasst, der mit einem Lastwagen verbunden werden kann, um den Transport der mobilen Reifenverarbeitungseinheit zu vereinfachen, wobei der Anhänger (17) dazu dient, die Komponenten der mobilen Reifenverarbeitungseinheit zu tragen.

11. Die mobile Reifenverarbeitungseinheit gemäß einem beliebigen der obigen Ansprüche, wobei der erste Separator (4) dazu dient, Substanzen mit einer ersten volumenbezogenen Masse abzutrennen, und der zweite Separator (5) dazu dient, Substanzen mit einer zweiten volumenbezogenen Masse abzutrennen, wobei die erste volumenbezogene Masse größer ist als die zweite volumenbezogene Masse.

12. Die mobile Reifenverarbeitungseinheit gemäß einem beliebigen der obigen Ansprüche, wobei der erste Separator (4) oder der zweite Separator (5) als Lufttisch konzipiert sind.

13. Die mobile Reifenverarbeitungseinheit gemäß einem beliebigen der obigen Ansprüche, wobei der Magnetabscheider (6, 6') eine Magnettrommel (6) oder eine magnetische Rohrleitung (6') ist, wobei die magnetische Rohrleitung (6') vorzugsweise mit mindestens einer Wartungsöffnung versehen ist, um die Reinigung derselben von den zurückgehaltenen restlichen Metall-Verunreinigungen zu erleichtern, und/oder wobei die magnetische Rohrleitung (6') an der Innenseite derselben mit einem dauermagnetischen Material versehen ist.

14. Die mobile Reifenverarbeitungseinheit gemäß einem beliebigen der obigen Ansprüche, die weiter einen Shredder (1) umfasst, der ausgebildet ist, um vollständige Reifen aufzunehmen und sie zu ersten Reifenstücken mit der ersten bestimmten Größe zu zerkleinern, und wobei
die Mühle (2) stromabwärts vom Shredder (1) positioniert und ausgebildet ist, um die zerkleinerten ersten Reifenstücke vom Shredder (1) zu empfangen.

15. Die mobile Reifenverarbeitungseinheit gemäß Anspruch 14, die weiter Förderbandstreifen (16) umfasst, welche mit dem Shredder (1) verbunden werden können, um ihm die vollständigen Reifen zuzuführen.

## Revendications

1. Unité de traitement de pneu mobile comprenant:
une meuleuse (2) qui est adaptée pour meuler des premières pièces de pneu ou des pneus entiers en seconds pièces de pneu d'une seconde taille donnée, la seconde taille donnée est choisie de sorte que les composants constituant le pneu entier soient substantiellement désunis suivant le meulage;
un premier séparateur (4) positionné en aval de la meuleuse (2), le premier séparateur (4) étant adapté pour recevoir les secondes pièces de pneu provenant de la meuleuse (2) et séparer au moyen de la gravité l'acier des secondes pièces de pneu;
un second séparateur (5) positionné en aval du premier séparateur (4), le second séparateur (4) étant adapté pour recevoir les secondes pièces de pneu moins l'acier séparé et séparer au moyen de la gravité les textiles des seconds pièces de pneu; et
un conteneur récepteur (7),
**caractérisé en ce que** l'unité de traitement de pneu mobile comprend:
un compresseur d'air (3) pour fournir de l'air pressurisé à l'unité de traitement de pneu mobile à une position en aval de la meuleuse (2), le premier séparateur (4) recevant l'air pressurisé provenant du compresseur d'air (3), le second séparateur (5) recevant aussi l'air pressurisé du compresseur d'air (3); et
un séparateur magnétique (6,6') positionné en aval du second séparateur (5) et recevant aussi de l'air pressurisé provenant du compresseur d'air (3), le séparateur magnétique (6,6') étant adapté pour recevoir les secondes pièces de pneu moins l'acier et les textiles séparés et retenir le long de la paroi de tubulure de celui-ci des impuretés métalliques résiduelles, de sorte qu'un caoutchouc substantiellement pur sorte du séparateur magnétique (6,6'), dans lequel le conteneur récepteur (7) est positionné en aval du séparateur magnétique (6,6') et adapté pour stoker le caoutchouc substantiellement pur qui sort du séparateur magnétique (6,6').

2. Unité de traitement de pneu mobile selon la revendication 1, comprenant en outre un premier transporteur (8) positionné en amont de la meuleuse (2) de manière à transporter les premières pièces de pneu ou des pneus entiers vers la meuleuse (2), dans lequel le premier transporteur (8) est disposé de préférence à un angle d'environ 45° par rapport au sol sur lequel l'unité de traitement de pneu mobile est positionné et/ou dans lequel le premier transporteur (9) est de préférence une courroie de transporteur sans fil incluant des protubérances ou gradins de rétention transversaux (9) par rapport à la direction de transport de la courroie pour faciliter le transport des premières pièces de pneu.

3. Unité de traitement de pneu mobile selon la revendication 1 ou 2, comprenant en outre une première tubulure (10) raccordant le côté en aval de la meuleuse (2) avec le côté en amont du premier séparateur (4), la première tubulure (10) étant en outre raccordée, à une section intermédiaire de celle-ci, au compresseur (3), de sorte que les seconde pièces de pneu qui sortent de la meuleuse (2) soient alimentés au moyen de l'air pressurisé à partir du compresseur (3) dans le premier séparateur (4).

4. Unité de traitement de pneu mobile selon une quelconque des revendications précédentes, comprenant en outre une seconde tubulure (11) raccordant le côté en aval du premier séparateur (4) avec le côté en amont du second séparateur (5), de sorte que les secondes pièces de pneu moins l'acier séparé qui sort du premier séparateur (4) soient alimentées au moyen de l'air pressurisé du compresseur (3) dans le second séparateur (5).

5. Unité de traitement de pneu mobile selon une quelconque des revendications précédentes, comprenant en outre une troisième tubulure (12) raccordant le côté en aval du second séparateur (5) avec le côté en amont du séparateur magnétique (6,6'), de sorte que les secondes pièces de pneu moins l'acier séparé et les textiles séparés sortis du second séparateur (5) soient alimentés au moyen de l'air pressurisé du compresseur (3) dans la tubulure magnétique (6).

6. Unité de traitement de pneu mobile selon une quelconque des revendications précédentes, comprenant en outre un premier conteneur (13) raccordé afin de recevoir l'acier séparé provenant du premier séparateur (4), dans lequel le premier conteneur (13) est de préférence conçu comme un poste de briquetage pour l'acier compacté.

7. Unité de traitement de pneu mobile selon une quelconque des revendications précédentes, comprenant en outre un second conteneur (14) raccordé afin de recevoir les textiles séparés provenant du second séparateur (5), dans lequel le second conteneur (14) est de préférence conçu comme un poste de briquetage pour les textiles compactés.

8. Unité de traitement de pneu mobile selon une quelconque des revendications précédentes, dans lequel le conteneur de réception (7) est raccordé de manière étanche au côté en aval du séparateur magnétique (6,6'), de sorte que l'air pressurisé provenant du compresseur (3) force le caoutchouc substantiellement pur qui sort du séparateur magnétique (6,6') dans le conteneur de réception (7) compactant le caoutchouc substantiellement pur, et dans lequel le conteneur de réception (7) est de préférence réalisé comme une tour de distribution de big bag.

9. Unité de traitement de pneu mobile selon une quelconque des revendications précédentes, comprenant en outre un générateur (15) qui est adapté pour alimenter électriquement l'unité de traitement de pneu mobile de manière autonome, dans lequel le générateur est de préférence entraîné par le carburant diesel.

10. Unité de traitement de pneu mobile selon une quelconque des revendications précédentes, comprenant en outre une remorque (17) pouvant être raccordée à un camion pour faciliter le transport de l'unité de traitement de pneu mobile, dans lequel la remorque (17) est conçue pour soutenir les composants de l'unité de traitement de pneu mobile.

11. Unité de traitement de pneu mobile selon une quelconque des revendications précédentes, dans lequel le premier séparateur (4) est conçu pour séparer des substances avec une première gravité spécifique et le second séparateur (5) est conçu pour séparer des substances avec une seconde gravité spécifique, dans lequel la première gravité spécifique est supérieure à la seconde gravité spécifique.

12. Unité de traitement de pneu mobile selon une quelconque des revendications précédentes, dans lequel le premier séparateur (4) ou le second séparateur (5) sont conçus comme une table soufflante.

13. Unité de traitement de pneu mobile selon une quelconque des revendications précédentes, dans lequel le séparateur magnétique (6,6') est un tambour magnétique (6) ou une tubulure magnétique (6'), dans lequel de préférence la tubulure magnétique (6') est pourvue d'au moins une ouverture de maintenance pour faciliter le nettoyage de celle-ci des impuretés métalliques résiduelle et/ou dans lequel la tubulure magnétique (6') est prévue au niveau du côté intérieur de celle-ci d'un matériau magnétique permanent.

14. Unité de traitement de pneu mobile selon une quelconque des revendications précédentes, comprenant en outre une déchiqueteuse (1), qui est adaptée pour recevoir des pneus entiers et déchiqueter les pneus entiers en premières pièces de pneu de la première taille donnée, et dans lequel
la meuleuse (2) est positionnée en aval d'une déchiqueteuse (1) et est adaptée pour recevoir les premières pièces de pneu déchiquetées provenant de la déchiqueteuse.

15. Unité de traitement de pneu mobile selon la revendication 14, comprenant en outre des bandes de convoyage d'alimentation (16) pouvant être raccordées à la déchiqueteuse (14) de manière à alimenter les pneus entiers dans celle-ci.
